# EUROPÄISCHE PATENTANMELDUNG

(11) **EP 1 160 821 A2**
(43) Veröffentlichungstag der Anmeldung: **05.12.2001**
(21) Anmeldenummer: 01107504.1
(22) Anmeldetag: 26.03.2001
(51) Int. Cl.: H01J 9/00, H01J 61/02, H01J 61/36

(54) **Verfahren zur Beschriftung von Quarzglaslampen und damit hergestellte Quarzglaslampen**

(30) Priorität: 30.05.2000 DE 10026567
(71) Anmelder: Patent-Treuhand-Gesellschaft für elektrische Glühlampen mbH, 81543 München (DE)
(72) Erfinder: Brems, Xaver, 91809 Biesenland (DE); Rechermann, Johann, 91809 Biesenland (DE); Rosenbauer, Georg, 71747 Westheim (DE)

(57) **Zusammenfassung**

Die vorliegende Erfindung betrifft ein Verfahren zur Beschriftung von Quarzglas-Lampen mit mindestens einer von Quarzglas umgebenen Metall-Einschmelzfolie (10,12) zur elektrischen Spannungsversorgung von im Innenraum eines Lampengefäßes angeordneten Leuchtmitteln (15), wobei die Metall-Einschmelzfolie (10,12) durch das Quarzglas hindurch mittels eines Lasers beschriftet wird. Die Erfindung betrifft weiterhin eine Quarzglaslampe mit mindestens einer von Quarzglas umgebenen Metall-Einschmelzfolie (10,12) zur elektrischen Spannungsversorgung von im Innenraum eines Lampengefäßes angeordneten Leuchtmitteln (15), wobei die Metall-Einschmelzfolie (10,12) ein Beschriftungsfeld (16) ausbildet und die Beschriftung des Beschriftungsfelds (16) durch das Quarzglas hindurch mittels eines Lasers erfolgt.

## Beschreibung

### Technisches Gebiet

Die Erfindung betrifft ein Verfahren zur Beschriftung von Quarzglaslampen mit mindestens einer von Quarzglas umgebenen Metall-Einschmelzfolie zur elektrischen Spannungsversorgung von im Innenraum eines Lampengefäßes angeordneten Leuchtmittel. Das Leuchtmittel ist dabei entweder eine Glühwendel einer Glühlampe oder eine Elektrode zur Erzeugung eines Entladungsbogen bei einer Entladungslampe. Insbesondere handelt es sich dabei um ein Verfahren zur Beschriftung von Halogenlampen, also entweder Halogenglühlampen oder Entladungslampen mit einer Halogenfüllung. Des weiteren betrifft die Erfindung eine mit dem Verfahren hergestellte Quarzglaslampe.

### Stand der Technik

Zur Beschriftung von Quarzglaslampen, insbesondere von Halogenlampen sind verschiedenartige Verfahren bekannt. Insbesondere werden derartige Lampen mittels des sogenannten " Tampo-Print-Verfahrens " beschriftet bzw. gestempelt.

Bei diesem Verfahren ergeben sich jedoch eine Vielzahl von technischen Problemen. So ist die Stempelaufbringung gemäß dem " Tampo-Print-Verfahren " ein die Lampe berührendes Verfahren, bei dem die Lampe beschädigt werden kann. Des weiteren muss für jede Lampenkennzeichnung ein eigenes Stempelklischee hergestellt werden, was zu hohen Kosten führt. Eine Tagesstempelung der zu beschriftenden Quarzglaslampen ist daher kaum möglich. Zudem ergeben sich Stillstandszeiten bei einem Klischeewechsel. Ein weiterer Nachteil ist, dass die Stempelklischees verschleißen und sich so das Risiko von Stempelfehlern deutlich erhöht. Des weiteren weist das bekannte Verfahren den Nachteil auf, dass die Stempelfarbe mit separaten Ausheizbrennern eingebrannt werden muss. Auch ist es nachteiligerweise möglich, dass der Stempel im nachhinein abgekratzt werden kann. Schließlich ergibt sich ein weiterer Nachteil aus der Tatsache, dass die Tampo-Print-Stempel nicht mittels einer automatischen Bildverarbeitung überprüft werden können, da aufgrund der sich im Hintergrund der Beschriftung angeordneten Metall-Einschmelzfolie Kontrastprobleme auftreten.

### Darstellung der Erfindung

Es ist daher Aufgabe der vorliegenden Erfindung, ein Verfahren gemäß dem Oberbegriff des Anspruchs 1 bereitzustellen, welches die beschriebenen Nachteile der herkömmlichen Beschriftungsverfahren für Quarzglaslampen überwindet.

Es ist weitere Aufgabe der vorliegenden Erfindung eine entsprechend hergestellte Quarzglaslampe bereitzustellen.

Diese Aufgaben werden mit einem Verfahren bzw. einer Quarzglaslampe mit den Merkmalen des Oberbegriffs des Anspruchs 1 bzw. des Anspruchs 8 durch die Merkmale des kennzeichnenden Teils des Anspruchs 1 bzw. des Anspruchs 8 gelöst.

Besonders vorteilhafte Ausgestaltungen finden sich in den abhängigen Ansprüchen.

Bei einem erfindungsgemäßen Verfahren zur Beschriftung von Quarzglaslampen wird die Metall-Einschmelzfolie durch das Quarzglas hindurch mittels eines Lasers beschriftet. Dadurch ist gewährleistet, dass es zu keinen Beschädigungen der zu beschriftenden Quarzglaslampen kommt, da es sich hier um einen berührungsloses Beschriftungsverfahren handelt. Zudem verbilligt sich das erfindungsgemäße Beschriftungsverfahren gegenüber den bekannten Verfahren deutlich, da teuere Stempelklischees mit den oben genannten Nachteilen wegfallen. Des weiteren ist auch kein Einbrennen der Stempelfarbe mehr notwendig. Schließlich ergibt sich durch das erfindungsgemäße Beschriftungsverfahren ein optimaler Farbkontrast, d. h. eine gut lesbare Kennzeichnung der Beschriftung über die gesamte Lebensdauer der Lampe. Ein weiterer Vorteil des erfindungsgemäßen Verfahrens ist, dass die Kennzeichnung bzw. Beschriftung nicht entfernt werden kann. Zudem ist nunmehr eine Tagesstempelung problemlos möglich. Des weiteren ermöglicht es das erfindungsgemäße Beschriftungsverfahren, dass die Beschriftungsqualität mittels automatisierter Bildverarbeitung überprüft werden kann, da keine Kontrastprobleme auftreten.

In einer weiteren vorteilhaften Ausgestaltung des erfindungsgemäßen Verfahrens ist die Metall-Einschmelzfolie eine Molybdänfolie. Insbesondere kann dabei eine dotierte Molybdänfolie verwendet werden.

In einer weiteren vorteilhaften Ausgestaltung des erfindungsgemäßen Verfahrens ist der Laser ein Nd:YAG-Laser. Zur Laserbeschriftung wird dabei vorteilhafterweise eine Wellenlänge von 1064 nm verwendet. Zudem ist vorteilhaft, wenn der Laser gepulst ist. Dadurch ist gewährleistet, dass einerseits eine kontrastreiche, gut lesbare Kennzeichnung der Lampe entsteht und andererseits die Lebensdauer der Lampe durch den Beschriftungsvorgang nicht beeinträchtigt wird.

In einer weiteren vorteilhaften Ausgestaltung des erfindungsgemäßen Verfahrens wird zur Erhöhung der Beschriftungsgeschwindigkeit die Laserleistung erhöht und/oder die Pulsfrequenz des Lasers erniedrigt. Dadurch können sehr hohe Durchsatzzahlen bei der Beschriftung von Quarzglaslampen erzielt werden, was wiederum die Kosten für den Beschriftungsvorgang einer einzelnen Quarzglaslampe deutlich senkt.

In einer weiteren vorteilhaften Ausgestaltung des erfindungsgemäßen Verfahrens werden zur Vermeidung von Glasrissen in der Quetschung die Laserparameter (Laserdurchmesser, Laserleistung, Pulsfrequenz, usw.) optimal auf die Beschriftungsgeschwindigkeit abgestimmt.

Bei einer erfindungsgemäßen Quarzglaslampe bildet die Metall-Einschmelzfolie ein Beschriftungsfeld aus, wobei die Beschriftung des Beschriftungsfelds durch das Quarzglas hindurch mittels eines Lasers erfolgt. Dadurch wird vorteilhafter Weise eine Quarzglaslampe bereitgestellt, die einerseits durch den Beschriftungsvorgang nicht beschädigt werden kann und andererseits kostengünstig herstellbar ist, da sich die Kosten des Beschriftungsverfahrens deutlich erniedrigen. Zudem ist eine dauerhafte, kontrastreiche Beschriftung der Quarzglaslampe gewährleistet.

In einer vorteilhaften Ausgestaltung der erfindungsgemäßen Quarzglaslampe ist die metallische Einschmelzfolie eine Molybdänfolie. Diese kann zusätzlich vorteilhaft dotiert sein.

In einer vorteilhaften Ausgestaltung der erfindungsgemäßen Quarzglaslampe ist die Glasoberfläche der Quetschung möglichst glatt, um eine gute Lesbarkeit der Beschriftung zu gewährleisten.

Die Erfindung betrifft weiterhin die Verwendung eines Nd: YAG-Lasers zur Beschriftung von Quarzglaslampen mit mindestens einer von Quarzglas umgebenen Molybdän-Einschmelzfolie zur elektrischen Spannungsversorgung von im Innenraum eines Lampengefäßes angeordneten Leuchtmitteln.

### Beschreibung der Zeichnungen

Im folgenden soll die Erfindung anhand eines Ausführungsbeispiels näher erläutert werden.

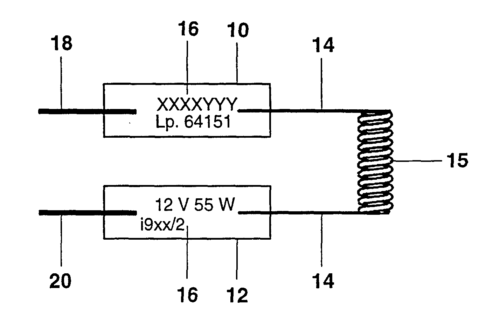

Die Figur zeigt eine schematische Darstellung zweier Metall-Einschmelzfolien 10, 12, insbesondere zweier Molybdänfolien, die einerseits mit den Wendelenden 14 der innerhalb eines Lampengefäßes (nicht dargestellt) angeordneten leuchtenden Glühwendel 15 einer Halogenglühlampe und andererseits mit jeweils einem Kontaktstift 18, 20 leitend verbunden sind, um die elektrische Spannungsversorgung der Glühwendel 15 zu gewährleisten. Des weiteren erkennt man, dass die Metall-Einschmelzfolien 10, 12 jeweils ein Beschriftungsfeld 16 aufweisen. Die Beschriftung der Beschriftungsfelder 16 erfolgt dabei durch das die Metall-Einschmelzfolien 10, 12 umgebende Quarzglas (nicht dargestellt) hindurch mittels eines Lasers (nicht dargestellt). Üblicherweise beträgt die Dicke der Molybdäneinschmelzfolien ca. 10 µm bis 100 µm. In der Breite und der Länge messen diese Molybdänfolien mehrere Millimeter bis Zentimeter.

## Patentansprüche

1. Verfahren zur Beschriftung von Quarzglaslampen mit mindestens einer von Quarzglas umgebenen Metall-Einschmelzfolie (10, 12) zur elektrischen Spannungsversorgung von im Innenraum eines Lampengefäßes angeordneten Leuchtmitteln (15), **dadurch gekennzeichnet, dass** die Metall-Einschmelzfolie (10, 12) durch das Quarzglas hindurch mittels eines Lasers beschriftet wird.

2. Verfahren nach Anspruch 1, **dadurch gekennzeichnet, dass** die Metall-Einschmelzfolie (10, 12) eine Molybdänfolie ist.

3. Verfahren nach Anspruch 2, **dadurch gekennzeichnet, dass** die Molybdänfolie dotiert ist.

4. Verfahren nach Anspruch 1, **dadurch gekennzeichnet, dass** der Laser ein Nd:YAG-Laser ist.

5. Verfahren nach Anspruch 4, **dadurch gekennzeichnet, dass** zur Nd:YAG-Laserbeschriftung eine Wellenlänge von 1064 nm verwendet wird.

6. Verfahren nach Anspruch 1, **dadurch gekennzeichnet, dass** der Laser gepulst ist.

7. Verfahren nach Anspruch 1, **dadurch gekennzeichnet, dass** zur Erhöhung der Beschriftungsgeschwindigkeit die Laserleistung erhöht und/oder die Pulsfrequenz des Lasers erniedrigt wird.

8. Quarzglaslampe mit mindestens einer von Quarzglas umgebenen Metall-Einschmelzfolie (10, 12) zur elektrischen Spannungsversorgung von im Innenraum eines Lampengefäßes angeordneten Leuchtmitteln (15), **dadurch gekennzeichnet, dass** die Metall-Einschmelzfolie (10, 12) ein Beschriftungsfeld (16) ausbildet, wobei die Beschriftung des Beschriftungsfelds (16) durch das Quarzglas hindurch mittels eines Lasers erfolgt.

9. Quarzglaslampe nach Anspruch 8, **dadurch gekennzeichnet, dass** die Metall-Einschmelzfolie (10,12) eine Molybdänfolie ist.

10. Quarzglaslampe nach Anspruch 9, **dadurch gekennzeichnet, dass** die Molybdänfolie dotiert ist.

11. Quarzglaslampe nach Anspruch 8, **dadurch gekennzeichnet, dass** der Laser ein Nd:YAG-Laser ist.

12. Verwendung eines Nd:YAG-Lasers zur Beschriftung von Quarzglaslampen mit mindestens einer von Quarzglas umgebenen Molybdän-Einschmelzfolie zur elektrischen Spannungsversorgung von im Innenraum eines Lampengefäßes angeordneten Leuchtmitteln.
